# EUROPÄISCHE PATENTSCHRIFT

(11) **EP 1 488 611 B1**
(45) Veröffentlichungstag und Bekanntmachung des Hinweises auf die Patenterteilung: **31.08.2005**
(21) Anmeldenummer: 03744761.2
(22) Anmeldetag: 18.03.2003
(51) Int. Cl.: H04L 29/12

(54) **AAA SERVERSYSTEM ZUR EFFIZIENTEN ZUGANGSKONTROLLE UND ADRESSZUORDNUNG**
AAA SERVER SYSTEM FOR EFFICIENT ACCESS CONTROL AND ADDRESS ASSIGNMENT
SYSTEME DE SERVEURS AAA PERMETTANT UN CONTROLE D'ACCES ET UNE AFFECTATION D'ADRESSES EFFICACES

(30) Priorität: 27.03.2002 DE 10213862
(43) Veröffentlichungstag der Anmeldung: 22.12.2004
(73) Patentinhaber: SIEMENS AKTIENGESELLSCHAFT, 80333 München (DE)
(72) Erfinder: KEIL, Wolfgang, 80993 München (FR)
(86) Internationale Anmeldenummer: PCT/DE2003/000895
(87) Internationale Veröffentlichungsnummer: WO 2003/081875

(56) Entgegenhaltungen:
- EP-A- 1 089 524
- DROMS R ET AL: "- DHCP Failover Protocol" DHCP FAILOVER PROTOCOL, März 2000 (2000-03), XP002188657 Gefunden im Internet: <URL:http://www.globecom.net/ietf/draft/dr aft-ietf-dhc-failover-06.html> [gefunden am 2002-01-30]
- MCAULEY A J ET AL: "Self-configuring networks" CONFERENCE PROCEEDINGS ARTICLE , Bd. 1, 22. Oktober 2000 (2000-10-22), Seiten 315-319, XP010532606

## Beschreibung

Die Erfindung betrifft ein AAA (Authentification Authorization Accounting) Serversystem und ein Verfahren zur Verwaltung eines Pools von logischen Adressen.

Die logische Adressierung von Teilnehmern bzw. Hosts und die Verwaltung des zur Verfügung stehenden Adressraums bei Netzverbunden und im Internet ist ein wichtiges Aufgabenfeld der Netzwerktechnik. Die notwendige Hardware für die Verwaltung von logischen Adressen und zur Bereitstellung der entsprechenden Funktionalität bei der Adressvergabe ist häufig in Form von AAA (Authentification Authorization Accounting) Servern bzw. AAA Serversystemen gegeben. Für die Adressverwaltung durch Multiserversysteme müssen Informationen über die Adressvergabe, über zur Verfügung stehende Ressourcen sowie Statusinformationen auf zuverlässige Weise mit einer hohen Übertragungsrate zwischen den einzelnen Servern ausgetauscht werden.

Bei der Einwahl von Teilnehmern in das Internet, z.B. mittels herkömmlicher schmalbandiger Telefonverbindungen oder xDSL-Technologie (DSL: Digital Subscriber Line), kontrollieren üblicherweise AAA Server den Zugang zum Internet, die das RADIUS (Remote Authentification Dial-In User Service) Protokoll verwenden und deshalb RADIUS Server genannt werden. Hierbei findet der Übergang vom Telefonnetz zum Internet bzw. IP-Netz an einem Zugangsserver statt, der für das Internet als Network Access Server (NAS) bezeichnet wird. Bevor für einen Teilnehmer eine Verbindung aufgebaut wird, werden zwischen dem NAS und dem RADIUS Server mittels des RADIUS Protokolls Nachrichten ausgetauscht, um die Identität des Teilnehmers und seine Zugangsrechte im RADIUS Server überprüfen zu lassen. Ist die Antwort des RADIUS Servers positiv, d.h. der Teilnehmer ist autorisiert, baut der NAS eine Verbindung zwischen IP-Netz und dem Teilnehmer bzw. seinem Internet-Endgerät auf. Dabei benötigt das Internet-Endgerät des Teilnehmers eine eindeutige routbare IP-Adresse. Da der Vorrat der zur Verfügung stehenden IP-Adressen beschränkt ist, vergeben die meisten Internetdienste-Anbieter - im Folgenden als Internet Service Provider (ISP) bezeichnet - IP-Adressen nur für die Dauer einer Internetverbindung an ihren Kunden, d.h. den Teilnehmer. Bei verschiedenen Internet-Sitzungen bekommt daher der Teilnehmer bzw. sein Internet-Endgerät in der Regel verschiedene Internet-Adressen zugewiesen. Dem Internet Service Provider steht üblicherweise ein IP-Adressbereich - im folgenden als Adresspool bezeichnet - zur Verfügung, aus dem die Adressen für die temporäre Zuweisung an Teilnehmern entnommen werden. Ein Internet Service Provider kann auch über mehrere Adresspools verfügen, beispielsweise um mehrere Servicegruppen für verschiedene Dienste bilden zu können.

Die dynamische Zuordnung von IP-Adressen erfolgt üblicherweise entweder im Zugangsserver bzw. NAS oder im AAA Server bzw. RADIUS Server. Die Zuordnung von IP-Adressen in den Zugangsservern bzw. NAS hat den Nachteil eines beträchtlichen Verwaltungs- und Wartungsaufwandes bei Internet Service Providern, die eine große Zahl von Zugangsservern betreiben. Adresspools müssen in jedem einzelnen Zugangsserver eingerichtet werden. Bei großen Internet Service Providern ist die Anzahl der zu versorgenden Zugangsservern beträchtlich und folglich der Aufwand bei Einrichtung und Änderung von Adresspools erheblich. Zudem fehlt eine zentrale Kontrolle der laufenden Internetverbindungen und der dabei benutzten IP-Adressen. Beispielsweise für Betreiber von Zugangsnetzwerken (Access Networks), die den Zugang an kleinere Internet Service Provider weitervermieten, ist eine zentrale Verwaltung und Vergabe der zur Verfügung stehenden Adresspools von großer Wichtigkeit.

Bei großen Internet Service Providern ist deshalb üblich, dass die Ressourcenverwaltung und damit auch die Verwaltung der IP-Adressen zentral durch einen oder mehrere hochleistungsfähige und hochverfügbare AAA Server erfolgt. Unter "hochleistungsfähig" ist in diesem Zusammenhang die Fähigkeit gemeint, eine große Zahl an Zugangskontrollen pro Sekunde bearbeiten zu können.

Eine übliche Realisierung für eine hochleistungsfähige zentrale Steuerung ist mittels eines Multiserversystems. Dieses besteht in der Regel aus einer Anzahl von Einzelrechnern bzw. Servern, die mittels des IP-Netzwerkes miteinander verbunden sind. Diese Lösung ist aufwandsarm, weil teure ausfallssichere Hardware oder Clustersoftware nicht erforderlich sind. Zudem ist das System durch die Hinzunahme weiterer Rechner leicht nach oben skalierbar. Aus Redundanzgründen zur Ausfallssicherheit sollten die Einzelrechner in der Lage sein, Aufgaben anderer Rechner des Multiserversystems zu übernehmen. Die Lastverteilung auf die verschiedenen Einzelrechner des Multiserversystems erfolgt beispielsweise durch die RADIUS Clients auf den Zugangsservern.

Für eine Verwaltung der IP-Adressen durch ein Multiserversystem müssen Informationen über die Vergabe von Adressen den Bedarf an Adressen und Zustandsinformationen über laufende und abgeschlossene Internetsitzungen gesammelt und den Einzelrechnern verfügbar gemacht werden. Wegen der Redundanzanforderungen sollten die einem Einzelrechner zur Verfügung stehenden Informationen auch wenigstens einem anderen Einzelrechner zugängig sein. Weiter ist dafür zu sorgen, dass Adressen durch verschiedene Einzelrechner nicht mehrfach vergeben werden.

Diese Anforderungen bei der Verwaltung von IP-Adressen durch eine Multiserversystem können beispielsweise dadurch erfüllt werden, dass die Einzelrechner des Multiserversystems durch einen zentralen Server, z.B. ein DHCP (Dynamic Host Configuration Protocol) Server oder einen unter Verwendung von herstellerspezifischen Protokollen arbeitenden Server, mit IP-Adressen versorgt werden. Diese Lösung hat folgende Nachteile:
- Der Schutz des zentralen Servers gegen Ausfälle, z.B. durch Doppelung, ist in der Regel mit beträchtlichen Aufwand verbunden.
- Für eine zuverlässige Kommunikation zwischen dem zentralen Server und den anderen Rechnern des Multiserversystems sollten ausgetauschte Nachrichten quittiert werden. Dadurch wächst die zu bearbeitende Informationsmenge mit der Anzahl der Rechner stark an. Die Skalierbarkeit, d.h. die Integration weitere Rechner in das Multiserversystem wird dadurch beeinträchtigt.
- Eine erhöhte Anzahl von Verbindungswünschen führt zu einer Zunahme des Datenverkehrs zwischen dem zentralen Server und den Einzelrechnern. Daher kann es zu Belastungsspitzen (Bursts) kommen, die Verzögerungen bei der Bearbeitung verursachen könne.
- Der zentrale Server führt häufig zu zusätzlichen Wartungsaufwand.

Zur Erhöhung der Ausfallsicherheit gibt es die Möglichkeit mittels eines erweiterten RADIUS Protokolls Zustandsinformationen direkt in den Zugangsservern bzw. NAS zu speichern. Diese Lösung ist in dem RFC (Request for Comments) 2882 dokumentiert, funktioniert aber nur für Zugangsserver die die entsprechende Protokollerweiterung unterstützen.

Alternativ können die gesamten Informationen über Adresspools auf allen Einzelrechnern des Multiserversystems gespeichert und Nachrichten zur Koordinierung der Adressreservierungen zwischen den Einzelrechnern ausgetauscht werden. Diese Vorgehensweise führt zu einer erheblichen Volumen an auszutauschenden Nachrichten, wenn Doppelvergaben von Adressen vermieden werden sollten.

Ein Verfahren zur Aktualisierung von Informationen in einem Server System, bei dem von einem ersten Server regelmäßig eine Aktualisierungsnachricht mit zu vergebenden logischen Adressen an alle anderen Server des Systems gesendet wird, ist aus der XP002188657 ("DHCP Failover Protocol") bekannt.

Die Erfindung hat zur Aufgabe, die effiziente Verwaltung von einem oder mehreren Adressbereichen in einem AAA-Serversystem anzugeben, die die Nachteile herkömmlicher Methoden vermeidet.

Die Aufgabe wird durch ein Verfahren nach Anspruch 1 gelöst.

Bei dem erfindungsgemäßen Verfahren zu Aktualisierung von Informationen in einem erfindungsgemäßen AAA Serversystem wird von einem ersten AAA Server des Serversystem regelmäßig eine Aktualisierungsnachricht an alle anderen Server des AAA Serversystems gesendet. Diese Aktualisierungsnachricht umfasst Informationen über Statusänderungen bei dem ersten AAA Server zugeordneten Teilmengen des Adresspools bzw. der Adresspools seit der vorhanden gegangenen Aktualisierung. Durch das regelmäßige, beispielsweise in festen Zeitintervallen vorgenommene Senden von Aktualisierungsnachrichten der AAA Server an alle anderen AAA Server des AAA Serversystems kann die Vergabe von logischen Adressen durch die einzelnen AAA Server des AAA Serversystems koordiniert werden. Die sich in Gebrauch befindlichen Teilmengen des Adresspools bzw. der Adresspools können so an alle AAA Server signalisiert werden. Zudem kann eine Information bezüglich der während des nächsten Zeitintervalls benötigten Ressourcen an logischen Adressen zwischen den Servern AAA ausgetauscht werden. Dabei schätzt ein AAA Server vor dem Senden der Aktualisierungsnachricht die Anzahl der in Zeitraum zwischen der zusendenden Aktualisierungsnachricht und der darauffolgenden Aktualisierungsnachricht zu vergebenden logischen Adressen ab. Dies kann geschehen, indem das Produkt der maximal durch den AAA Server bearbeitbaren Rate an Anforderungen für die Vergabe einer logischen Adresse und der dem Zeitraum zwischen der zu sendenden Aktualisierungsnachricht und der darauffolgenden Aktualisierungsnachricht gebildet wird . Die so erhaltene Abschätzung liefert eine obere Grenze für die Anzahl der benötigten Adressen. Aus den dem Server zugeordneten Teilmengen des Adresspools werden welche für die Entnahme der nach der Abschätzung in der Zeitraum benötigten logischen Adressen bestimmt. Die Aktualisierungsnachricht kann dann Informationen darüber enthalten, welche dem AAA Server zugeordneten Teilmengen der Adresspools für die Entnahme der nach der Abschätzung in dem Zeitraum benötigten logischen Adressen bestimmt wurden . Auf diese Weise können Teilmengen von logischen Adressen als "unsicher" markiert werden, d.h. dass eine Vergabe von logischen Adressen aus diesen Teilmengen innerhalb des nächsten Zeitintervalls möglich ist. Diese Markierung spielt eine Rolle, wenn einzelne AAA Server zusätzliche Teilmengen des Adresspools benötigen, um die Verbindungsanfragen zu befriedigen. In ein solchen Fall kann die Zuständigkeit bzw. Zuordnung von nicht als "unsicher" markierten Teilmengen des Adresspools geändert und dem AAA Server mit Mangel an logischen Adressen zugeordnet werden Bei diesem Verfahren kommunizieren die einzelnen AAA Server eine Mischung aus redundanten Daten und Sperrinformationen (markierte Teilmengen des Adresspools, deren Zuordnung nicht zur Disposition steht). Dadurch wird das Volumen der Daten, die zwischen den Servern ausgetauscht werden, beschränkt. Den einzelnen AAA Servern bleibt in Regelfall verborgen, welche Einzeladressen von anderen AAA Servern vergeben werden. Stattdessen werden die Teilmengen kommuniziert, aus denen Adressen vergeben werden. Die auf den einzelnen Rechnern zu speichernden Statusinformationen ist dadurch reduziert - bezüglich anderer AAA Server wird der Status von (evtl. indizierten) Teilmengen statt der einzelner Adressen festgehalten - und die Datenrate des Informationsaustausches zwischen den einzelnen Servern wird reduziert.

Bei Ausfall eines AAA Servers können die diesem AAA Server zugeordneten Teilmengen des Adresspools einem anderen AAA Server, z.B. nach Maßgabe einer Prioritätsliste, zugeordnet werden. Evtl. werden die Teilmengen des ausgefallenen Servers auch zwischen mehreren anderen AAA Servern verteilt. Es ist dann sinnvoll, Teilmengen von logischen Adressen, die bei der letzten erhaltenen Aktualisierungsnachricht des ausgefallenen Server als "unsicher" markiert wurden, für eine Zeitspanne nicht für die Neuvergabe von logischen Adressen zu nutzen. Diese Zeitspanne kann beispielsweise der maximale erlaubten Verbindungsdauer entsprechen. Aktualisierungsnachrichten können auch beim Neubooten von AAA Servern des AAA Serversystems verwendet werden. Beispielsweise übermittelt ein neugebooteter AAA Server an die anderen AAA Server eine Multicastnachricht, mit der er die Übersendung von Aktualisierungsnachrichten und die Zuordnung von Teilmengen des Adresspools anfordert. Als Transportprotokoll zu Vermittlung von Aktualisierungsnachrichten können das TCP/IP Protokoll, das RADIUS Protokoll oder DIAMETER Protokoll verwendet werden. Durch das reduzierte Volumen an ausgetauschten Nachrichten ist es möglich, dass die einzelnen Server des Serversystems an verschiedenen Orten d.h. dezentral aufgestellt werden.

Weitere vorteilhafte Weiterbindungen des Erfindungsgegenstandes sind in den weiteren Unteransprüchen angegeben.

Im folgenden wird die Erfindung im Rahmen eines Ausführungsbeispiels anhand von fünf Figuren näher erläutert. Es zeigen:
Fig. 1: Ein Szenarium für die dynamische Zuordnung von Adressen für Internetsitzungen.
Fig. 2: Die Aufteilung eines Adressbereiches bzw. Adresspools in Teilmengen bzw. Subpools.
Fig. 3: Die Zuordnung von Teilmengen an logischen Adressen zu RADIUS Servern.
Fig. 4: Den Austausch von Aktualisierungsnachrichten zwischen drei RADIUS Servern.
Fig. 5: Die verschiedenen Schritte bei der Anforderung einer zusätzlichen Teilmengen an logischen Adressen.

Im Rahmen des Ausführungsbeispiels wird angenommen, dass ein oder mehrere IP Adressbereiche durch ein RADIUS Serversystem, d.h. eine Multiserversystem, das mittels des RADIUS Protokolls arbeitet, verwaltet werden. Das RADIUS Serversystem besteht aus mehreren RADIUS Servern, die mit Hilfe eines Netzwerkes verbunden sind. Spezielle Software, z.B. Clustersoftware, wird nicht benötigt. Der Einfachheit halber wird angenommen, dass im Rahmen des Ausführungsbeispiels ein Adresspool einem IP Adressbereich und Teilmengen des Adresspools Teilbereichen von IP Adressen entsprechen. Ein globaler Adressbereich bzw. Adresspool kann einem Internet Service Provider zugeordnet sein oder für bestimmte Dienstklasse reserviert werden.

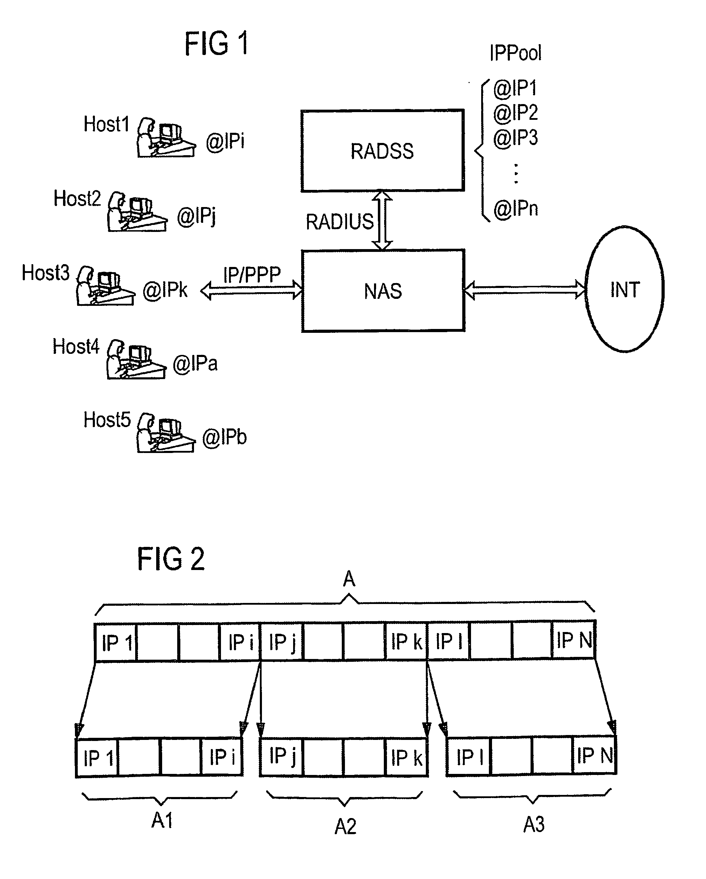

Im Figur 1 sind Internetendgeräte Host1, ..., Host5 dargestellt, über die Teilnehmer eine Verbindung zum Internet INT aufbauen können. Mit Hilfe des IP (Internet Protokolls) Protokolls IP, das über dem PPP (Point-to-Point Protocol) Protokoll PPP läuft, kann eine Verbindung zwischen dem Endgerät Host1 ... Host5 und einem Zugangsserver NAS hergestellt werden. Bevor von dem Zugangsserver eine Verbindung mit dem Internet INT hergestellt wird, wird eine Anfrage bei dem RADIUS Serversystem RADSS durchgeführt. Der Austausch von Nachrichten zwischen dem Zugangsserver NAS und dem RADIUS Serversystem RADSS erfolgt mit Hilfe des Radiusprotokolls RADIUS. Das RADIUS Serversystems RADSS verfügt über einen Pool IPPool von eigenen IP Adressen @IP1, ...,@Ipn , die dynamisch für den Zeitraum der Verbindung den Internetendgeräten Host1, ..., Hostn zugeordnet werden. Nach Erhalt der Autorisierungsnachricht durch das RADIUS Serversystem und der Zuteilung einer IP Adresse für den Zeitraum der Verbindung baut der Zugangsserver NAS eine Internetverbindung für das anfragende Internetendgerät Host1, ..., Host5 auf.

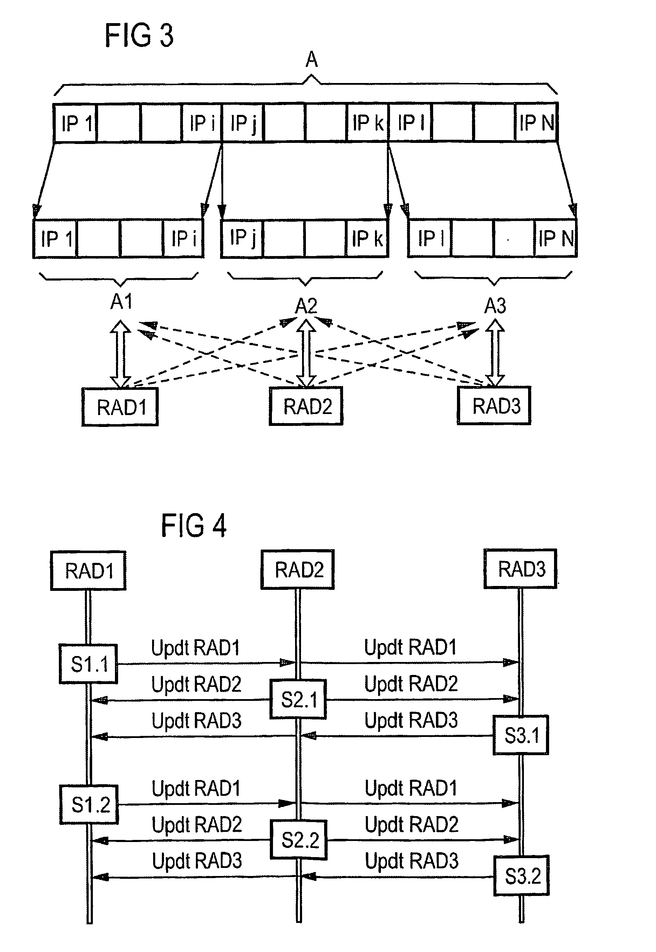

In Figur 2 ist ein Adresspool A dargestellt, der aus dem Adressbereich IP 1 bis IP N besteht. Dieser Adresspool A wird in drei Teilmengen A1, .., A3 unterteilt, die den Teiladressbereichen IP 1 bis IP I, IP J bis IP K, und IP L bis IP N entsprechen. Jeder der RADIUS Server verfügt über den gesamten Adresspool A, d.h. auf allen Servern ist der gesamte Adressbereich gespeichert. Jeder der RADIUS Server kann IP Adressen jeder beliebigen Teilmengen A1, ..., A3 von IP Adressen freigeben. Dagegen besteht ein exklusives Recht der Zuordnung von IP Adressen für Verbindungen, d.h. jeder RADIUS Server hat eine oder mehrere Teilmengen A1, .., A3 von Adressen zugeordnet, aus der er IP Adressen vergeben kann. Diese Vergaberechte von IP Adressen können dynamisch zwischen den RADIUS Servern verschoben werden. In Figur 3 sind drei RADIUS Server RAD1, .., RAD3 dargestellt. Jedem ist ein Teilbereich von Adressen A1, ..., A3 zugewiesen (durch durchgezogene Pfeile gekennzeichnet), aus den er Adressen zuordnen kann. Alle drei RADIUS Server können benützte Adressen freigeben, was durch durchbrochene Pfeile gekennzeichnet ist.

In Figur 4 ist gezeigt, wie bei den einzelnen RADIUS Servern die Aktualisierung von Informationen über den Status der andere RADIUS Server vorgenommen wird. In regelmäßigen Zeitabständen sendet jeder RADIUS Server RAD1, ..., RAD3 eine Aktualisierungsnachricht an alle andern RADIUS Server RAD1, ..., RAD3, um über Änderungen bezüglich der zugeordneten Teilmengen an Adressen zu Informieren. Diese Aktualisierungsnachricht wird mit Hilfe von einem IP Multicastmechanismus versendet und betrifft nur Teilmengen, hinsichtlich der sich seit der letzten Aktualisierungsnachricht eine Änderung ergeben hat. Aktualisierungsnachrichten werden nicht quittiert. Die Doppeltvergabe von IP Adressen ist ausgeschlossen, weil schlimmstenfalls eine Freigabeinformation verloren geht, d.h. eine Information, die eine bereits benutzte IP Adresse betrifft. Die Freigabe erfolgt dann später, nachdem der Timer für die maximale Vergabezeit ausgelaufen ist. Zusätzlich enthält die Aktualisierungsnachricht Informationen über die Teilmengen von Adressen, aus welchen voraussichtlichen im folgende Zeitintervall IP Adressen vergeben werden. In Frage kommen dabei Teilmengen, die noch nicht vergebene IP Adressen zu Verfügung haben. Entsprechend Figur 4 sendet RADIUS Server RAD1 zu den Zeitpunkten S1.1 und S1.2 Aktualisierungsnachrichten UpdtRAD1 (für: Update von RAD1) an die RADIUS Server RAD2 und RAD3. Zu verschobenen Zeitpunkten S2.1 und S2.2 bzw. S3.1 und S3.2 senden der RADIUS Server RAD2 bzw. RADIUS Server RAD3 Aktualisierungsnachrichten UpdtRAD2 bzw. UpdtRAD3 jeweils an die beiden anderen RADIUS Server RAD1 und RAD 3 bzw. RAD1 und RAD2.

Auf jedem der RADIUS Server RAD1, ..., RAD3 werden folgende Informationen gespeichert, die den gesamten bzw. globalen Adresspool A betreffen:
- ein Bezeichner für den globalen Adresspool A für den Fall, dass mehrere globale Adresspools, beispielsweise für verschiedene Dienstklassen, verwendet werden.
- Eine Liste von den RADIUS Servern RAD1, .., RAD3, die Zugriff auf Adressen des globalen Adresspools A haben. Diese Liste beinhaltet die IP Adresse jedes RADIUS Servers RAD1, ..., RAD3, einen Bezeichner für jeden RADIUS Server RAD1, .., RAD3, den Zeitpunkt der letzten Aktualisierung für jeden RADIUS Server RAD1, .., RAD3 und die Gesamtzahl der aktuell freien, d.h. nicht vergebenen IP Adressen.
- Die erste IP Adresse des globalen Adressbereichs A.
- Die Anzahl von IP Adressen, die zu diesem Adressbereich A gehören.
- Die Zeitspanne zwischen zwei Aktualisierungen.
- Die maximale Zeitdauer, die für die Verbindung eines Internetendgeräts vorgesehen ist.
- Die Liste der Teilmengen von IP Adressen, beispielsweise in Form von Pointers, die jeweils auf die erste IP Adressen des Teilbereichs zeigen.
- Optional eine Liste von Zugangsservern bzw. Portkennungen. Diese Liste enthält alle verbundenen NAS in Form Ihrer IP Adressen oder Ihrer NAS Kennungen und ihrer Portzahlen.
- Für einen globalen Adresspool A kann zusätzlich ein Flag definiert werden, dass einen Mangel an freien IP Adressen anzeigt. Dieses Flag wird beispielsweise gesetzt, wenn die Gesamtzahl der freien IP Adressen kleiner wird als ein Schwellenwert, beispielsweise die Zeitspanne zwischen Aktualisierungen multipliziert mit der maximalen Rate an Anfragen nach IP Adressen. Das Setzen des Flags wird rückgängig gemacht, wenn die Anzahl der freien Adressen wieder den Schwellenwert übersteigt.

Folgende Informationen bezüglich der Teilmengen von Adressen werden auf allen RADIUS Servern gespeichert:
- Der Bezeichner des RADIUS Servers, der für die Teilmenge an Adressen verantwortlich ist, d.h. der AAA Server, der aus dieser Teilmenge IP Adressen vergeben kann.
- Die erste IP Adresse der Teilmenge bzw. des Teilbereiches an IP Adressen.
- Die Anzahl der von der Teilmenge umfassten IP Adressen.

Die auf den AAA RADIUS Servern vorgehaltenen, auf die Teilmengen an Adressen bezogenen Informationen werden in regelmäßigen Zeitabständen aktualisiert. Die Aktualisierung wird ausgelöst durch das Ablaufen eines Timers, der das Zeitintervall zwischen zwei Aktualisierungsnachrichten misst. Von dem RADIUS Server, der Aktualisierungsnachrichten hinsichtlich des Status seiner Teilmengen an Adressen sendet, werden die freien, d.h. nicht vergebenen Adressen, der zugeordneten Teilmengen an Adressen bestimmt und die Teilmengen, welche innerhalb des nächsten Zeitintervalls zur Benutzung in Frage kommen, identifiziert. Die Aktualisierungsnachricht umfasst dann die Kennung des Radiusservers, von dem die Nachricht gesendet wird, die Gesamtzahl der freien IP-Adressen dieses RADIUS Servers, die Kennungen bzw. Bezeichner der Teilmengen an Adressen, die für eine Benutzung innerhalb des nächsten Zeitintervalls in Frage kommen, d.h. die als "unsicher" markiert sind, Änderung hinsichtlich der Benutzung von Teilmengen seit der letzten Aktualisierungsnachricht und gegebenenfalls weitere Statusinformationen. Nach dem Senden der Aktualisierungsnachricht wird der Timer neu gestartet. Ein RADIUS Server, der eine Aktualisierungsnachricht erhält, setzt einen Überwachungstimer neu, der misst, wie viel Zeit seit der letzten Aktualisierungsnachricht verstrichen ist. Anhand der empfangenen Aktualisierungsnachricht bringt der RADIUS Server die Statusinformationen über den sendenden Radiusserver auf den neusten Stand.

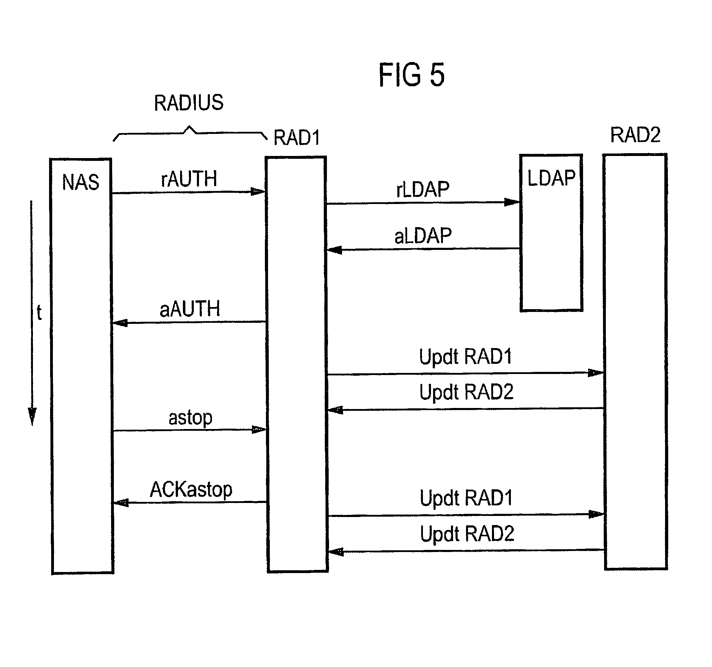

In Figur 5 ist der Austausch von Nachrichten zur und während der Verbindung eines Teilnehmers bzw. Endgeräts dargestellt. Von einem NAS (Network Access Server) wird für die Verbindung eines Internetendgerätes eine Authentifizierungsanfrage rAUTH mit Hilfe des Radiusprotokolls RADIUS an einen RADIUS Server RAD1 gerichtet. Diese Authentifizierungsanfrage rAUTH enthält die Kennung des NAS, den Bezeichner des Ports und die Kennung des Teilnehmers bzw. Endgerätes. Von dem RADIUS Server RAD1 wird eine Anfrage rLDAP an eine LDAP (Lightweight Directory Access Protocol)-Datenbank LDAP gestellt, im Zuge derer die Kennung bzw. Identität des Teilnehmers ermittelt wird. Von der LDAP-Datenbank LDAP wird in der Antwort aLDAP die Kennung der Teilmenge von Adressen mitgeteilt, aus der die IP-Adresse zu entnehmen ist. Daraufhin wird eine IP-Adresse aus dieser Teilmenge von IP-Adressen bestimmt. Anschließend teilt der RADIUS Server die bestimmte IP-Adresse dem NAS in einer Antwort aAUTH auf die Authentifizierungsanfrage mit. Die Tatsache dieser neuen Verbindung wird den anderen Radiusservern RAD2 im Zuge einer Aktualisierungsnachricht UpdtRAD1 z.B. in Form einer aktualisierten Gesamtzahl an benützten IP-Adressen und evtl. durch die Neumarkierung der entsprechenden Teilmenge an Adressen als "unsicher" mitgeteilt. Analog erhält der Radiusserver RAD1 während der Verbindung Aktualisierungsnachrichten UpdtRAD2 von anderen Radiusservern RAD2. Wenn die Verbindung unterbrochen werden soll, sendet der NAS eine Nachricht astop an den RADIUS Server, mit der die Abrechnung bzw. das Accounting für die entsprechende Verbindung unterbrochen werden soll. Diese Nachricht enthält die Kennung des Teilnehmers und die zugewiesene IP-Adresse. Der RADIUS Server RAD1 quittiert diese Nachricht dem NAS, wobei die Quittierungsnachricht ACKastop wieder die Kennung des Teilnehmers und die verwendete IP-Adresse enthält. Nach Beendigung der Verbindung werden in der darauffolgenden Aktualisierungsnachricht UpdtRAD1 die anderen Radiusserver RAD2 mit den entsprechend aktualisierten Statusinformationen versorgt.

Wenn der RADIUS Server nicht über genug Teilmengen an Adressen für die Anfragen durch Zugangsserver bzw. NAS verfügt, kann er die Zuordnung weiterer Teilmengen an IP-Adressen anfordern. Eine derartige Anfrage bzw. Anforderung wird ausgelöst, wenn die Gesamtzahl freier IP-Adressen des RADIUS Servers eine Schwelle unterschreitet, die beispielsweise durch das Produkt des Zeitintervalls zwischen Aktualisierungsnachrichten und der maximal bearbeitbaren Rate an Verbindungswünschen gegeben ist. In diesem Fall setzt der RADIUS Server ein Flag, das den Mangel an IP-Adressen anzeigt. Der RADIUS Server überprüft anhand der Statusinformationen der anderen RADIUS Server, welcher Server die größte Anzahl an freien IP-Adressen bzw. die größte Anzahl an nicht markierten bzw. nicht benutzten Teilmengen an Adressen aufweist. Falls ein RADIUS Server identifiziert werden kann, der über beträchtlich mehr freie Adressen als den Schwellenwert für Mangel an IP-Adressen verfügt, wird von dem RADIUS Server mit Adressmangel eine Anforderung für Zuweisung einer weiteren Teilmenge an Adressen gesendet. Mit Senden dieser Nachricht wird ein Überwachungstimer gesetzt. Bei einer negativen Antwort sendet der RADIUS Server mit Adressenmangel eine entsprechende Anfrage an andere RADIUS Server nach Maßgabe der dort freien Adressen. Falls kein RADIUS Server mit freien IP-Adressen infiziert werden kann oder wenn keine Antworten von den RADIUS Servern erhalten werden, wartet der RADIUS Server mit Adressmangel wenigstens ein Aktualisierungszeitintervall, bevor er seine Anfragen wiederholt. Falls in diesem Zeitraum alle freien IP-Adressen vergeben werden, werden zusätzliche Authentifizierungsanfragen von NAS zurückgewiesen. Wird dagegen eine positive Antwort auf die Anforderung einer neuen Teilmenge an Adressen erhalten, so wird diese positive Antwort mit einer Quittierungsnachricht an alle anderen RADIUS Server mittels Multicast quittiert und intern werden alle relevanten Daten aktualisiert. Dieser Mechanismus kann auch nach einen Reboot eines der RADIUS Server zur automatischen Rekonfiguration des RADIUS Servers verwendet werden.

Beim Ausfall eines der RADIUS Server wird durch eine Liste der Kennungen der RADIUS Server eine Hierarchie der Zuständigkeit vorgegeben. Nachdem von dem ausgefallenen RADIUS Server keine Aktualisierungsnachrichten mehr erhalten werden, übernimmt der RADIUS Server an der Spitze der Hierarchie oder der darauf folgende RADIUS Server die Kontrolle bzw. Verwaltung der entsprechenden IP-Adressbereiche. Dabei laufen im RADIUS Server, der die Verwaltung der Teilmengen von Adressen übernimmt, folgende Schritte ab:
Die Übernahme von Adressen wird durch den Ablauf des Überwachungstimers angestoßen. Danach wird eine Anforderung für eine Aktualisierungsnachricht an den ausgefallenen RADIUS Server gesendet. Wenn daraufhin keine Antwort enthalten wird, werden mittels einer Multicast-Nachricht alle anderen RADIUS Server darüber informiert, dass der RADIUS Server, der die Multicast-Nachricht sendet, die Verwaltung und Zuordnung der Teilmengen von Adressen des ausgefallenen RADIUS Servers übernimmt. Die Teilmengen von Adressen des übernehmenden RADIUS Servers werden um die übernommenen Teilmengen von Adressen erweitert. Dabei werden als "unsicher" markierte Teilmengen blockiert und ein Timer für die Blockierung gestartet. Dieser Timer misst die maximale Zeit für die Zuordnung einer IP-Adresse für eine Verbindung. Nach Ablauf des Timers wird die Blockierung der Teilmengen von Adressen zurückgenommen. Nun sind alle Ressourcen an IP-Adressen wieder verfügbar und der Ausfall des RADIUS Servers ist vollständig kompensiert.

## Patentansprüche

1. Verfahren zur Aktualisierung von Informationen in einem AAA Authentification Authorization Accounting, Serversystem, bei dem
- von einem ersten AAA Server (RAD1, RAD2, RAD3) des AAA Serversystems (RADSS) regelmäßig eine Aktualisierungsnachricht (UpdtRAD1, UpdtRAD2, UpdtRAD3) an alle anderen AAA Server (RAD1, RAD2, RAD3) des AAA Serversystems (RADSS) gesendet wird,
- diese Aktualisierungsnachricht (UpdtRAD1, UpdtRAD2, UpdtRAD3) Informationen über Statusänderungen von dem ersten AAA Server (RAD1, RAD2, RAD3) zugeordneten Teilmengen (A1, A2, A3) des Adresspools (A) seit der vorangegangenen Aktualisierungsnachricht (UpdtRAD1, UpdtRAD2, UpdtRAD3) umfasst, **dadurch gekennzeichnet**
- **dass** vor dem Senden der Aktualisierungsnachricht (UpdtRAD1, UpdtRAD2, UpdtRAD3) im ersten AAA Server (RAD1, RAD2, RAD3) eine Abschätzung der im Zeitraum zwischen der zu sendenden Aktualisierungsnachricht (UpdtRAD1, UpdtRAD2, UpdtRAD3) und der darauffolgenden Aktualisierungsnachricht (UpdtRAD1, UpdtRAD2, UpdtRAD3) zu vergebenden logischen Adressen durchgeführt wird,
- dem ersten AAA Server (RAD1, RAD2, RAD3) zugeordnete Teilmengen (A1, A2, A3) des Adresspools (A) für die Entnahme der nach der Abschätzung in dem Zeitraum benötigten logischen Adressen bestimmt werden, und
- die Aktualisierungsnachricht (UpdtRAD1, UpdtRAD2, UpdtRAD3) zusätzlich Informationen darüber enthält, welche dem ersten AAA Server (RAD1, RAD2, RAD3) zugeordnete Teilmengen (A1, A2, A3) des Adresspools (A) für die Entnahme der nach der Abschätzung in dem Zeitraum benötigten logischen Adressen bestimmt wurden.

2. Verfahren nach Anspruch 1,
**dadurch gekennzeichnet,**
- **dass** für die Abschätzung das Produkt der maximal durch den AAA Server (RAD1, RAD2, RAD3) bearbeitbare Rate an Anforderungen für die Vergabe einer logischen Adresse und der dem Zeitraum zwischen der zu sendenden Aktualisierungsnachricht (UpdtRAD1, UpdtRAD2, UpdtRAD3) und der darauffolgenden Aktualisierungsnachricht (UpdtRAD1, UpdtRAD2, UpdtRAD3) gebildet wird.

3. Verfahren nach einem der Ansprüche 1 oder 2,
**dadurch gekennzeichnet,**
- **dass** der erste AAA Server (RAD1, RAD2, RAD3) überprüft, ob die entsprechend der Abschätzung benötigten Teilmengen (A1, A2, A3) des Adresspools (A) zur Verfügung stehen, und
- **dass** bei negativen Ergebnis der Überprüfung durch den ersten AAA Server (RAD1, RAD2, RAD3) bewirkt wird, dass eine Teilmenge eines anderen AAA Servers (RAD1, RAD2, RAD3) dem ersten AAA Server (RAD1, RAD2, RAD3) zugeordnet wird.

4. Verfahren nach einem der Ansprüche 1 oder 2,
**dadurch gekennzeichnet,**
**dass** bei Ausfall des ersten AAA Servers (RAD1, RAD2, RAD3) die dem ersten AAA Server (RAD1, RAD2, RAD3) zugeordneten Teilmengen (A1, A2, A3) des Adresspools (A) einem zweiten AAA Server (RAD1, RAD2, RAD3) zugeordnet werden.

5. Verfahren nach Anspruch 4,
**dadurch gekennzeichnet,**
**dass** der zweite AAA Server (RAD1, RAD2, RAD3) nach Maßgabe einer Prioritätsliste von AAA Servern (RAD1, RAD2, RAD3) bestimmt wird.

6. Verfahren nach Anspruch 1 und einem der Ansprüche 4 oder 5,
**dadurch gekennzeichnet,**
**dass** die entsprechend der letzten von dem zweiten AAA Server (RAD1, RAD2, RAD3) erhaltenen Aktualisierungsnachricht des ersten AAA Servers (RAD1, RAD2, RAD3) für die Entnahme der nach der Abschätzung in dem Zeitraum benötigten logischen Adressen bestimmten Teilmengen (A1, A2, A3) des Adresspools (A) bei Ausfall des ersten AAA Servers (RAD1, RAD2, RAD3) für eine Zeitspanne nicht für die Neuvergabe von logischen Adressen (IP1, ..., IPN) genutzt wird.

7. Verfahren nach Anspruch 6,
**dadurch gekennzeichnet,**
**dass** die Zeitspanne nach Maßgabe der maximal erlaubten Verbindungsdauer bestimmt wird.

8. Verfahren nach einem der vorhergehenden Ansprüche,
**dadurch gekennzeichnet,**
- **dass** ein zweiter AAA Server (RAD1, RAD2, RAD3) neu gebootet wird, und
- **dass** von dem zweiten AAA Server (RAD1, RAD2, RAD3) eine Multicast-Nachricht an alle anderen AAA Server (RAD1, RAD2, RAD3) des AAA Serversystems (RADSS) übermittelt wird, wodurch die Übersendung von Aktualisierungsnachrichten (UpdtRAD1, UpdtRAD2, UpdtRAD3) und die Zuordnung von Teilmengen (A1, A2, A3) des Adresspools (A) an den ersten AAA Server (RAD1, RAD2, RAD3) angefordert wird.

9. Verfahren nach einem der vorhergehenden Ansprüche,
**dadurch gekennzeichnet,**
- **dass** als Transportprotokoll zur Übermittlung von Aktualisierungsnachrichten (UpdtRAD1, UpdtRAD2, UpdtRAD3) das TCP/IP Protokoll, das RADIUS Protokoll oder das DIAMETER Protokoll verwendet wird.

## Claims

1. Method for updating information in an AAA (Authentication, Authorisation and Accounting) server system, wherein
- an updating message (UpdtRAD1, UpdtRAD2, UpdtRAD3) is regularly sent by a first AAA server (RAD1, RAD2, RAD3) in the AAA server system (RADSS) to all other AAA servers (RAD1, RAD2, RAD3) in the AAA server system (RADSS),
- said updating message (UpdtRAD1, UpdtRAD2, UpdtRAD3) contains information about status changes in subsets (A1, A2, A3), assigned to the first AAA server (RAD1, RAD2, RAD3), of the address pool (A) since the preceding updating message (UpdtRAD1, UpdtRAD2, UpdtRAD3), **characterised in that**
- before the updating message (UpdtRAD1, UpdtRAD2, UpdtRAD3) is sent, an estimation is carried out in the first AAA server (RAD1, RAD2, RAD3) of the logical addresses to be assigned during the period between the updating message requiring to be sent (UpdtRAD1, UpdtRAD2, UpdtRAD3) and the updating message following that (UpdtRAD1, UpdtRAD2, UpdtRAD3),
- subsets (A1, A2, A3), assigned to the first AAA server (RAD1, RAD2, RAD3), of the address pool (A) are determined for removal of the logical addresses needed according to the estimation during the period, and
- the updating message (UpdtRAD1, UpdtRAD2, UpdtRAD3) additionally contains information about which subsets (A1, A2, A3), assigned to the first AAA server (RAD1, RAD2, RAD3), of the address pool (A) have been determined for removal of the logical addresses needed according to the estimation during the period.

2. Method according to claim 1,
**characterised in that**
- for estimation, the product is formed of the maximum rate processable by the AAA server (RAD1, RAD2, RAD3) of requests to assign a logical address and the period between the updating message requiring to be sent (UpdtRAD1, UpdtRAD2, UpdtRAD3) and the updating message that follows that (UpdtRAD1, UpdtRAD2, UpdtRAD3).

3. Method according to one of claims 1 or 2,
**characterised in that**
- the first AAA server (RAD1, RAD2, RAD3) checks whether the subsets (A1, A2, A3), needed according to the estimation, of the address pool (A) are available, and
- if the check result is negative, the first AAA server (RAD1, RAD2, RAD3) will cause a subset of another AAA server (RAD1, RAD2, RAD3) to be assigned to the first AAA server (RAD1, RAD2, RAD3).

4. Method according to one of claims 1 or 2,
**characterised in that**
if the first AAA server (RAD1, RAD2, RAD3) fails, the subsets (A1, A2, A3), assigned to the first AAA server (RAD1, RAD2, RAD3), of the address pool (A) will be assigned to the second AAA server (RAD1, RAD2, RAD3).

5. Method according to claim 4,
**characterised in that**
the second AAA server (RAD1, RAD2, RAD3) will be determined in accordance with a priority list of AAA servers (RAD1, RAD2, RAD3).

6. Method according to claim 1 and one of claims 4 or 5,
**characterised in that**
the partial subsets (A1, A2, A3) determined according to the first AAA server's (RAD1, RAD2, RAD3) last updating message received by the second AAA server (RAD1, RAD2, RAD3) of the address pool (A) for removal of the logical addresses needed according to the estimation during the period are not used in the event of failure of the first AAA server (RAD1, RAD2, RAD3) for a period of time for reassigning logical addresses (IP1, ..., IPN).

7. Method according to claim 6,
**characterised in that**
the period of time is determined in keeping with the maximum permitted connection duration.

8. Method according to one of the preceding claims,
**characterised in that**
- a second AAA server (RAD1, RAD2, RAD3) is rebooted, and
- a multicast message is conveyed by the second AAA server (RAD1, RAD2, RAD3) to all other AAA servers (RAD1, RAD2, RAD3) in the AAA server system (RADSS), through which massage the transmission of updating messages (UpdtRAD1, UpdtRAD2, UpdtRAD3) and the assignment of subsets (A1, A2, A3) of the address pool (A) to the first AAA server (RAD1, RAD2, RAD3) is requested.

9. Method according to one of the preceding claims,
**characterised in that**
- the TCP/IP protocol, the RADIUS protocol or the DIAMETER protocol is used as the transport protocol for conveying updating messages (UpdtRAD1, UpdtRAD2, UpdtRAD3).

## Revendications

1. Procédé pour la mise à jour d'informations sur un système de serveur AAA, Authentification Autorisation Accounting, dans lequel
- un premier serveur AAA (RAD1, RAD2, RAD3) du système de serveur AAA (RADSS) envoie régulièrement un message de mise à jour (UpdtRAD1, UpdtRAD2, UpdtRAD3) à tous les autres serveurs AAA (RAD1, RAD2, RAD3) du système de serveur AAA (RADSS),
- ce message de mise à jour (UpdtRAD1, UpdtRAD2, UpdtRAD3) comprend des informations sur des changements d'état de quantités partielles (A1, A2, A3), attribuées au premier serveur AAA (RAD1, RAD2, RAD3), de l'ensemble d'adresse (A) depuis le message de mise à jour précédent (UpdtRAD1, UpdtRAD2, UpdtRAD3), **caractérisé en ce que**
- avant l'envoi du message de mise à jour (UpdtRAD1, UpdtRAD2, UpdtRAD3), une évaluation des adresses logiques à attribuer dans la période s'écoulant entre le message de mise à jour (UpdtRAD1, UpdtRAD2, UpdtRAD3) à envoyer et le message de mise à jour (UpdtRAD1, UpdtRAD2, UpdtRAD3) suivant est effectuée sur le premier serveur AAA (RAD1, RAD2, RAD3),
- des quantités partielles (A1, A2, A3), attribuées au premier serveur AAA (RAD1, RAD2, RAD3), de l'ensemble d'adresse (A) sont destinées au prélèvement des adresses logiques utilisées selon l'évaluation au cours de la période, et
- le message de mise à jour (UpdtRAD1, UpdtRAD2, UpdtRAD3) contient en supplément les informations sur les quantités partielles (A1, A2, A3), attribuées au premier serveur AAA (RAD1, RAD2, RAD3), de l'ensemble d'adresse (A) qui sont destinées au prélèvement des adresses logiques utilisées selon l'évaluation au cours de la période.

2. Procédé selon la revendication 1,
**caractérisé en ce que**
- pour l'évaluation, on forme le produit du taux maximum, pouvant être traité par le serveur AAA (RAD1, RAD2, RAD3), de demandes pour l'attribution d'une adresse logique et la période s'écoulant entre le message de mise à jour (UpdtRAD1, UpdtRAD2, UpdtRAD3) à envoyer et le message de mise à jour (UpdtRAD1, UpdtRAD2, UpdtRAD3) suivant.

3. Procédé selon l'une quelconque des revendications 1 ou 2,
**caractérisé en ce que**
- le premier serveur AAA (RAD1, RAD2, RAD3) vérifie si les quantités partielles (A1, A2, A3), utilisées selon l'évaluation, de l'ensemble d'adresse (A) sont mises à disposition et **en ce que**
- dans le cas d'un résultat négatif du contrôle, le premier serveur AAA (RAD1, RAD2, RAD3) demande qu'une quantité partielle d'un autre serveur AAA (RAD1, RAD2, RAD3) soit attribuée au premier serveur AAA (RAD1, RAD2, RAD3).

4. Procédé selon l'une quelconque des revendications 1 ou 2,
**caractérisé en ce que**
- en cas de défaillance du premier serveur AAA (RAD1, RAD2, RAD3), les quantités partielles (A1, A2, A3), attribuées au premier serveur AAA (RAD1, RAD2, RAD3), de l'ensemble d'adresse (A) sont attribuées à un second serveur AAA (RAD1, RAD2, RAD3).

5. Procédé selon la revendication 4,
**caractérisé en ce que**
le second serveur AAA (RAD1, RAD2, RAD3) est déterminé en fonction d'une liste de priorité de serveurs AAA (RAD1, RAD2, RAD3).

6. Procédé selon la revendication 1 et l'une quelconque des revendications 4 ou 5,
**caractérisé en ce que**
les quantités partielles (A1, A2, A3) de l'ensemble d'adresse (A), qui sont destinées selon le dernier message de mise à jour, reçu du second serveur AAA (RAD1, RAD2, RAD3), du premier serveur AAA (RAD1, RAD2, RAD3) au prélèvement des adresses logiques utilisées selon l'évaluation au cours de la période, ne sont pas utilisées pour la nouvelle attribution d'adresses logiques (IP1, ..., IPN) en cas de défaillance du premier serveur AAA (RAD1, RAD2, RAD3) pour un certain laps de temps.

7. Procédé selon la revendication 6,
**caractérisé en ce que**
le laps de temps est déterminé en fonction de la durée de liaison maximum autorisée.

8. Procédé selon l'une quelconque des revendications précédentes,
**caractérisé en ce que**
- un second serveur AAA (RAD1, RAD2, RAD3) est redémarré, et
- **en ce que** le second serveur AAA (RAD1, RAD2, RAD3) envoie un message multicast à tous les autres serveurs AAA (RAD1, RAD2, RAD3) du système de serveur AAA (RADSS), l'envoi de messages de mise à jour (UpdtRAD1, UpdtRAD2, UpdtRAD3) et l'attribution de quantités partielles (A1, A2, A3) de l'ensemble d'adresse (A) au premier serveur AAA (RAD1, RAD2, RAD3) étant demandés.

9. Procédé selon l'une quelconque des revendications
précédentes,
**caractérisé en ce que**
- on utilise comme protocole de transport pour la transmission de messages de mise à jour (UpdtRAD1, UpdtRAD2, UpdtRAD3) le protocole TCP/IP, le protocole RADIUS ou le protocole DIAMETER.
